# EUROPÄISCHE PATENTSCHRIFT

(11) **EP 2 907 866 B1**
(45) Veröffentlichungstag und Bekanntmachung des Hinweises auf die Patenterteilung: **29.05.2019**
(21) Anmeldenummer: 15154477.2
(22) Anmeldetag: 10.02.2015
(51) Int. Cl.: C10L 10/02, C10L 1/02, C10L 1/18, C10L 1/198, C10L 1/188, C10L 1/185

(54) **KRAFTSTOFF FÜR SELBSTZÜNDUNGSMOTOREN AUF BASIS VON POLYOXYMETHYLENDIALKYLETHERN**
FUEL FOR SELF-IGNITION ENGINES BASED ON POLYOXYMETHYLENE DIALKYL ETHERS
CARBURANT POUR MOTEURS À ALLUMAGE PAR COMPRESSION À BASE DE POLYOXYMÉTHYLÈNEDIALKYLÉTHER

(30) Priorität: 17.02.2014 DE 102014101947
(43) Veröffentlichungstag der Anmeldung: 19.08.2015
(73) Patentinhaber: MAN Truck & Bus AG, 80995 München (DE); Technische Universität München, 80333 München (DE)
(72) Erfinder: Jacob, Eberhard, 82152 Krailling (DE); Pastötter, Christian, 90429 Nürnberg (DE); Rothe, Dieter, 90403 Nürnberg (DE); Härtl, Martin, 81547 München (DE); Seidenspinner, Philipp, 80469 München (DE)
(74) Vertreter: Held, Stephan

(56) Entgegenhaltungen:
- EP-A1- 2 759 588
- DE-A1- 19 633 725
- US-A1- 2007 130 822
- US-A1- 2007 204 506
- HIDEYUKI OGAWA ET AL: "Ultra Low Emissions and High Performance Diesel combustion with a combination of high EGR, three-Way catalyst, and a highly oxygenated fuel, dimethoxy methane (dmm)", SAE INTERNATIONAL TECHNICAL PAPER 2000-01-1819, SAE, US, 19. Juni 2000 (2000-06-19), Seiten 87-95, XP008176818, DOI: 10.4271/2000-01-1819

## Beschreibung

Die Erfindung betrifft einen Kraftstoff für Selbstzündungsmotoren, d. h. einen Dieselkraftstoff.

Aus der Motortechnischen Zeitschrift MTZ, 72. Jahrgang, Seiten 198-202 (2011) ist bekannt, dass Ruß- und Partikelemissionen durch Zumischung von Polyoxaalkanen und anderen Oxygenaten zum Dieselkraftstoff vermindert werden können. Allerdings ist es nicht möglich, diese unter den Grenzwert für die Partikelanzahl nach der Euro-VI-Norm abzusenken. Um diese gesetzlichen Vorgaben zu erfüllen, ist ein Partikelfilter, der nachgeschaltet wird, erforderlich.

Ogawa et al. beschreibt in SAE Technical Paper Series, 2000-01-1819, Seiten 1 bis 11, dass an einem Einzylindermotor ein Sauerstoffgehalt von größer 38 Gew.-% des Kraftstoffs erforderlich ist, um eine "rauchfreie" Verbrennung zu erzeugen. Die Rußpartikelemission wurde gemäß diesem Dokument mit einem "Bosch smoke meter" (dabei handelt es sich um eine diskontinuierliche stationäre Messung der Rußkonzentration mit einer Nachweisgrenze von 0,5 mg Ruß/kWh) gemessen. Eine rauchfreie Verbrennung wurde mit Dimethoxymethan als Kraftstoff auf Kosten einer unvollständigen Verbrennung desselben demonstriert. Die THC (total hydrocarbon)- und CO-Emissionen stiegen bei 30 % Abgasrückführung (AGR) bemerkenswert an, so dass wiederum ein Katalysator eingesetzt werden musste.

Aus dem SAE Technical Paper Series, 2013-01-1035 ist die Verwendung eines Gemisches von Polyoxymethylendimethylethern der Formel CH₃O(-CH₂O-)ₙCH₃ mit n = 3, 4 und 5 als Kraftstoff in einem PKW unter Erfüllung der Euro-2-Norm bekannt. Die gravimetrisch ermittelten Partikelemissionen konnten auf das Euro-4-Niveau gesenkt werden. Die Verwendung des Gemisches von Polyoxymethylendimethylethern der Formel CH₃O(-CH₂O-)ₙCH₃ mit n = 3, 4 und 5 konnte die Anzahl der emittierten Nanopartikel im Vergleich zu Dieselkraftstoff nicht beeinflussen (siehe Figur 6). Das Emissionsniveau der emittierten Nanopartikel lag im Bereich von 6 bis 7 E+6 #/cm³.

In SAE Technical Paper Series, 2012-01-1053 wird die Verwendung eines Gemisches von Polyoxymethylendimethylethern der Formel CH₃O(-CH₂O-)ₙCH₃ mit n = 3, 4 und 5 an einem EURO-4-Motor beschrieben, wobei die Emissionsstufe Euro 5/1 (ohne einen Partikel-Grenzwert) ohne die Verwendung von Partikelfiltern erreicht wurde.

Der Erfindung liegt die Aufgabe zugrunde, obige Nachteile zu überwinden. Insbesondere liegt der Erfindung die Aufgabe zugrunde, die existierenden gesetzlichen Auflagen zur Absenkung der CO₂-Emission und der Emission von Schadstoffen, insbesondere von Particulate Matter (PM) und von Nanopartikeln (PN), zu erfüllen.

Durch die Einführung von Grenzwerten für die Partikelanzahl (PN) im Abgas von Motoren ab den Emissionsstufen Euro-5/2 für PKW und Euro VI (2014) für Nutzfahrzeuge ist die Verwendung eines Partikelfilters zwingend erforderlich, um die vorgegebenen PN-Grenzwerte zu unterschreiten. Die Einführung von Real Drive Emissionen (RDE) wird die Erfüllung der Emissionsauflagen nochmals erschweren.

Hier will die vorliegende Erfindung Abhilfe schaffen. Ziel der Erfindung ist es daher auch, eine weitgehend nanopartikelfreie Verbrennung des Kraftstoffes im Dieselmotor zu erzielen, um so die Basis für niedrige bis niedrigste Abgasemissionen zu schaffen. Unter nanopartikelfreier Verbrennung wird vorliegend verstanden, dass die Partikelanzahl im Motorenabgas maximal eine Größenordnung über der Partikelanzahl in der Umgebungsluft liegt und ein Wall-Flow-Partikelfilter entfallen kann. Ferner ist es Ziel der Erfindung eine hohe Abgasrückführungs (AGR)-Verträglichkeit zur innermotorischen NOₓ-Absenkung zu erzielen. Schließlich ist es Aufgabe der Erfindung, den Ruβ/NOₓ- und PN/NOₓ-Trade off zu vermeiden. Die Abgasnachbehandlung kann sich auf einen Oxidationskatalysator beschränken, um die derzeit geltenden gesetzlichen Grenzwerte für Kohlenwasserstoffe HC und CO zu unterschreiten und nichtlimitierte Emissionen, z. B. von CH₂O, zu vermeiden. Optional sollte auch die Verwendung eines SCR-Katalysators möglich sein.

Ferner ist es Ziel der vorliegenden Erfindung den Aufwand hinsichtlich Herstellungskosten, Platzbedarf und Wartungskosten für die Abgasnachbehandlung, insbesondere die Verminderung des Abgasgegendrucks durch den Entfall von Wall-Flow-Partikelfiltern (DPF), zu vermindern.

Ferner soll eine Verminderung der Emissionen durch die Vermeidung von aktiver Regeneration des Filters erzielt werden. Dieselpartikelfilter können bei ihrer Regeneration Schadstoffe, wie z. B. Schwefelsäure, polyaromatische Kohlenwasserstoffe und stickstoffhaltige polyaromatische Kohlenwasserstoffe, emittieren und erhöhen die CO₂-Emissionen (Abgasgegendruck, Zusatzkraftstoff für die Regeneration).

Schließlich liegt der vorliegenden Erfindung die Aufgabe zu Grunde, die CO₂-Emission zu vermindern. Weiterhin liegt der vorliegenden Erfindung die Aufgabe zu Grunde, sich den physikalischen und chemischen Eigenschaften, besonders bezüglich Cetanzahl, Viskosität und Lubricity, eines Dieselkraftstoffs nach EN590 anzunähern.

Erfindungsgemäß werden obige Aufgaben mit einem Kraftstoff für Selbstzündungsmotoren, d. h. einem Dieselkraftstoff, nach Anspruch 1 gelöst, der folgende Bestandteile enthält
a) mindestens einen niedermolekularen Polyoxymethylendialkylether der Formel RO(-CH₂O-)ₙR, wobei R ein C₁- bis C₄-Alkyl-Rest und n 1 bis 5 ist,
b) 0,05 bis 5 Gew.-% mindestens eines höhermolekularen Polyalkylenglykolalkylethers der Formel R¹O(-CH₂-CHR₂-O-)ₙH sowie Mischpolymerisate davon und/oder der Formel H(-O-CHR₂-CH₂-)ₙ-O-CH₂-CH₂-O-(-CH₂-CHR₂-O-)ₙH sowie Mischpolymerisate davon, wobei R¹ ein C₁- bis C₄-Alkyl-, R₂ ein Wasserstoff- oder Methyl-Rest und n 10 bis 200 ist, sowie Gemische von diesen Polyalkylenglykolalkylethern,
c) 0 bis 20 Gew.-% mindestens eines höhermolekularen Polyoxymethylendialkylethers der Formel RO(-CH₂O-)ₙR, wobei R ein C₁-bis C₄-Alkyl-Rest und n 6 bis 10 ist,
d) 1 bis 5 Gew.-% mindestens eines höhermolekularen Polyethylenglykoldialkylethers der Formel RO(-CH₂CH₂O-)ₙR, wobei R ein C₁-bis C₄-Alkyl-Rest und n 11 bis 23 ist,
e) 0 bis 0,5 Gew.-% mindestens einer organischen Peroxidverbindung,
f) 0 bis 0,1 Gew.-% mindestens einer längerkettigen Fettsäure und
g) 0 bis 12 Gew.-% Dimethylether,
wobei der bis 100 Gew.-% fehlende Anteil auf den mindestens einen niedermolekularen Polyoxymethylendialkylether fällt.

Der Begriff "enthält" umfasst auch den Begriff "besteht aus".

Der erfindungsgemäße Kraftstoff für Selbstzündungsmotoren umfasst, wie erwähnt, mindestens einen niedermolekularen Polyoxymethylendialkylether der Formel RO(-CH₂O-)ₙR, wobei R ein C₁- bis C₄ Alkyl-Rest und n 1 bis 5.

In einer bevorzugten Ausführungsform ist R in dem mindestens einen niedermolekularen Polyoxymethlendialkylether ein Methyl-, ein Ethyl-, ein n-Propyl- und/oder ein n-Butyl-Rest. Ganz besonders bevorzugt ist R ein Methyl- und Ethyl-Rest. Am meisten bevorzugt ist R in dem niedermolekularen Polyoxymethylendialkyether ein Methyl-Rest, da dieser kostengünstig und kommerziell leicht verfügbar ist.

In einer bevorzugten Ausführungsform ist in dem mindestens einen niedermolekularen Polyoxymethylendialkylether n = 1 und/oder 2. In einer weiteren bevorzugten Ausführungsform ist n 3, 4 und/oder 5. Besonders bevorzugt ist n = 1, da ein derartiger Polyoxymethylendialkylether bereits großtechnisch erzeugt wird.

Ebenfalls erfindungswesentlich ist der Einsatz mindestens eines höhermolekularen Polyalkylenglykolalkylethers der Formel R¹O(-CH₂-CHR²-O-)ₙH sowie Mischpolymerisate davon und/oder der Formel H(-O-CHR²-CH₂-)ₙ-O-CH₂-CH₂-O-(-CH₂-CHR²-O-)ₙH sowie Mischpolymerisate davon, wobei R¹ ein C₁- bis C₄-Alkyl- und R² ein Wasserstoff- oder Methyl-Rest und n 10 bis 200, vorzugsweise 10 bis 55, ist, sowie Gemische von diesen Polyalkylenglykolalkylethern. Der Einsatz dieser Polyalkylenglykolalkylether führt zur Erhöhung der Viskosität, Schmierfähigkeit und Oberflächenspannung des erfindungsgemäßen Kraftstoffs für Selbstzündungs-motoren. Ferner dienen diese als Zündbeschleuniger (zur Erhöhung der Cetanzahl).

In einer bevorzugten Ausführungsform ist n in den mindestens einem höhermolekularen Polyalkylenglykolalkylether 30 bis 55, besonders bevorzugt 35 bis 55 und ganz besonders bevorzugt 40 bis 55.

In einer bevorzugten Ausführungsform ist R¹ in dem mindestens einem höhermolekularen Polyalkylenglykolalkylether ein n-Butyl-Rest, da dieser kostengünstig und kommerziell leicht verfügbar ist.

Das mittlere Molekulargewicht des mindestens einen höhermolekularen Polyalkylenglykolalkylethers sowie dessen Mischpolymerisate liegt vorzugsweise im Bereich von 4000 bis 6000 Dalton, bevorzugt im Bereich von 5000 bis 5500 Dalton.

In einer besonderen Ausführungsform handelt es sich bei dem mindestens einem höhermolekularen Polyalkylenglykolalkylether der Formel R¹O(-CH₂-CHR²-O-)ₙH um Mischpolymerisate derselben. Unter Mischpolymerisaten wird verstanden, dass Polymere vorliegen, in denen R² einmal ein Wasserstoff-Rest und einmal ein Methyl-Rest ist.

Besonders bevorzugte höhermolekulare Polyalkylenglykolalkylether sind Polyethylenglykolalkylether, Polypropylenglykolalkylether und Mischpolymerisate aus Polyethylenglykolalkylethern und Polypropylenglykolalkylethern, wobei es sich bei dem Alkyl-Rest vorzugweise um einen n-Butyl-Rest (Synalox B-Serie) handelt. Bei den Synalox D Produkten handelt es sich um den bifunktionellen Alkylrest (Alkylenrest; -CH₂CH₂-) als Bindeglied zwischen den Polyalkylenglykoletherketten.

Ganz besonders bevorzugt sind Mischpolymerisate von etwa 50 bis 90 Gew.-%, vorzugsweise von etwa 50 bis 70 Gew.-%, besonders bevorzugt von etwa 60 Gew.-%, Polyethylenglykolalkylether und von etwa 10-50 Gew.-%, vorzugsweise etwa 30 bis 50 Gew.-%, besonders bevorzugt etwa 40 Gew.-% Polypropylenglykolalkylether. Alsbevorzugt haben sich die Synalox-Produkte der Firma Dow Chemical erwiesen. Hierbei sind die Synalox B und besonders die Synalox D Produktebevorzugt. Hervorzuheben ist das Produkt Synalox D40-700 mit einem Molekulargewicht von 5300. Ganz besonders hervorzuheben sind die Synalox-Produkte der D Serie mit 10-15 Gew.-% Polypropylenglykolalkyletheranteil mit Molekulargewichten von bis zu etwa 15 000 Dalton (mittleres Molekulargewicht). Trotz des hohen Molekulargewichts besteht eine genügend hohe Löslichkeit in den niedermolekularen Polyoxymethylendialkylethern, insbesondere auch in den niedermolekularen Polyoxymethylendimethylethern.

Wie vorstehend erwähnt wird der mindestens eine höhermolekulare Polyalkylenglykolalkylether in einer Menge von 0,05 bis 5 Gew.-% eingesetzt. Besonders bevorzugt sind Mengen von 1 bis 4 Gew.-%, ganz besonders von 2 bis 3,5 Gew.-%.

Bei dem mindestens einem höhermolekularen Polyoxymethylendialkylether und/oder Polyethylenglykoldialkylether handelt es sich, wie bereits vorstehend erwähnt, um einen Polyoxymethylendialkylether der Formel RO(-CH₂O-)ₙR, wobei R ein C₁- bis C₄-Alkyl-Rest und n 6 bis 10, vorzugweise 7 bis 8 ist und/oder einen Polyethylenglykoldialkylether der Formel RO(-CH₂CH₂O-)ₙR, wobei R ein C₁- bis C₄ Alkyl-Rest und n 11 bis 23, vorzugweise 20 bis 23 ist.

In diesen höhermolekularen Polyoxymethylendialkylether und/oder Polyethylenglykoldialkylether ist R ein C₁-bis C₄-Alkyl-Rest. In einer ganz besonders bevorzugten Ausführungsform ist R ein Methyl-Rest, da derartige Verbindungen kostengünstig und kommerziell leicht verfügbar sind.

In einer bevorzugten Ausführungsform beträgt das Molekulargewicht des mindestens einen höhermolekularen Polyoxymethylendialkylethers und/oder Polyethylenglykoldialkylethers 200 bis 1200 Dalton. Handelt es sich dabei um den höhermolekularen Polyoxymethylendialkylether, dann beträgt das Molekulargewicht vorzugsweise 100 bis 500 Dalton, besonders bevorzugt 150 bis 400 Dalton. Handelt sich dagegen um den Polyethylenglykoldialkylether, dann ist das Molekulargewicht vorzugweise größer als 300 Dalton, besonders bevorzugt größer als 400 Dalton.

Geeignete höhermolekulare Polyoxymethylendialkylether sind beispielsweise Polyglykol DME 500, Polyglykol DME 750 und Polyglykol DME 1000, alle erhältlich von der Fima Clariant.

Der Einsatz dieser höhermolekularen Polyoxymethylendialkylether und/oder Polyethylenglykoldialkylether ist wichtig, um die Cetanzahl entsprechend zu erhöhen.

Der mindestens eine höhermolekulare Polyoxymethylendialkylether der Formel RO(-CH₂O-)ₙR liegt vorzugweise in einer Menge von 1 bis 10 Gew.-%, besonders bevorzugt in einer Menge von 1 bis 5 Gew.-% vor.

Der mindestens eine höhermolekulare Polyethylenglykoldialkylether der Formel RO(-CH₂CH₂O-)ₙR liegt in einer Menge von 1 bis 5 Gew.-% vor.

Bei der organischen Peroxidverbindung handelt es sich vorzugsweise um Di-tert-Butylperoxid (DTBP). Di-tert-Butylperoxid führt ebenfalls zu einer Erhöhung der Cetanzahl.

Die organische Peroxidverbindung wird vorzugsweise in einer Menge von 0,01 bis 0,5 Gew.-% und besonders bevorzugt in einer Menge von 0,01 bis 0,3 Gew.-% zugesetzt. Ganz besonders bevorzugt ist eine Menge von 0,01 bis 0,05 Gew.-%. Eine zu niedrige Menge führt nicht zu der gewünschte Cetanzahlerhöhung, während eine zu hohe Menge aus Kostengründen zu vermeiden ist.

Der Einsatz von Di-tert-Butylperoxid hat ferner den Vorteil, dass dieses im Gegensatz zu Cetanzahl-Verbesserern auf Nitratbasis, wie beispielsweise 2-Ethylhexylnitrat, ohne die Bildung von Brennstoff-NOₓ verbrennt.

Di-tert-Butylperoxid ist als Cetanzahlverbesserer für Kraftstoffe für Selbstzündungsmotoren mit niedermolekularen Polyoxymethylendialkylethern der Formel RO(-CH₂O-)ₙR als Basiskraftstoff besonders gut geeignet.

Die organische Peroxidbindung kann zusätzlich zu den vorliegenden Bestandteilen eingesetzt werden. Es ist aber auch möglich, mit deren Einsatz die Menge des mindestens einen höhermolekularen Polyoxymethylendialkylethers und/oder des mindestens einen höhermolekularen Polyethylenglykoldialkyethers zu vermindern bzw. es kann dadurch auch auf den mindestens einen höhermolekularen Polyoxymethylendialkylether und/oder den mindesten einen Polyethylenglykoldialkylether vollständig verzichtet werden.

Bei der mindestens einen längerkettigen Fettsäure handelt es sich bevorzugt um eine längerkettige Fettsäure die Formel CₙH₂ₙ₊₁COOH und/oder der Formel CₙH₂ₙ₋₁COOH mit n=9 bis 19, besonders bevorzugt um Ölsäure, Stearinsäure, Palmitinsäure und/oder Laurinsäure. Ganz besonders bevorzugt ist Stearinsäure, da diese verhältnismäßig kostengünstig und chemisch stabil ist.

Die längerkettige Fettsäure kann zusätzlich zu den jeweiligen Bestandteilen im erfindungsgemäßen Kraftstoff für Selbstzündungsmotoren vorliegen. Es ist aber auch möglich, durch den Einsatz dieser die Menge des mindestens einen Polyalklenglykolalkylethers zu reduzieren.

Die längerkettige Fettsäure wird vorzugsweise in einer Menge von 0,01 bis 0,1, besonders bevorzugt von 0,01 bis 0,05 eingesetzt.

In einer nicht erfindungsgemäßen Ausführungsform handelt es sich bei dem Kraftstoff um einen Kraftstoff für Selbstzündungsmotoren umfassend bzw. bestehend aus
a) mindestens einen niedermolekularen Polyoxymethylendialkylether der Formel RO(-CH₂O-)ₙR, wobei R ein Methyl- oder Ethyl-Rest und n 1 bis 5 ist,und
b) 0,005 bis 5 Gew.-% des Mischpolymerisats des Polyalkylenglykolalkylethers der Formel H(-O-CHR²-CH₂-)ₙ-O-CH₂-CH₂-O-(-CH₂-CHR²-O-)ₙH.

In dieser Ausführungsform ist der Einsatz von Dimethoxymethan als niedermolekularer Polyoxymethylendialkylether besonders bevorzugt. Ebenfalls bevorzugt ist, dass das Mischpolymerisat etwa 50 bis 90 Gew.-% Polyethylenglykolalkylether und etwa 10 bis 50 Gew.-% Polypropylenglykolalkylether enthält. Vorzugsweise beträgt das Molekulargewicht des Mischpolymerisats mehr als etwa 7500 Dalton, vorzugsweise mehr als etwa 9500 Dalton und besonders bevorzugt mehr als etwa 11 500 Dalton. Vorzugsweise sollte das Molekulargewicht nicht über 15 000 Dalton liegen.

In einer bevorzugten Ausführungsform beträgt der Sauerstoffgehalt des erfindungsgemäßen Kraftstoffs für Selbstzündungsmotoren mehr als 40 Gew.-%. Dies hat den Vorteil, dass auch bei hohen AGR-Raten die Partikelemission im gewünschten Zielbereich liegt.

In einer ganz besonders bevorzugten Ausführungsform enthält der erfindungsgemäße Kraftstoff nicht mehr als 5000 ppm, vorzugsweise nicht mehr als 500 ppm und besonders bevorzugt nicht mehr als 100 ppm höhere Kohlenwasserstoffe sowie deren Derivaten. Unter höheren Kohlenwasserstoffen sowie deren Derivaten werden Kohlenwasserstoffe mit mehr als drei C-Atomen verstanden.

In einer weiteren bevorzugten Ausführungsform beträgt der Schwefelgehalt nicht mehr als 1 ppm, vorzugweise nicht mehr als 0,1 ppm (gemessen nach R. Hearn, M. Berglund, M. Ostermann, N. Pusticek, P. Taylor, Analytica Chimica Acta 532 (2005) 55-60). Damit wird der Einsatz von preiswerten Nichtedelmetallkatalysatoren zur Nachoxidation von unverbrannten Oxygenaten und Kohlenmonoxid ermöglicht.

In einer weiteren bevorzugten Ausführungsform beträgt der Gehalt an Asche nicht mehr als 20 ppm, vorzugweise nicht mehr als 2 ppm (gemessen nach DIN EN ISO 6245).

In einer bevorzugten Ausführungsform weist der Kraftstoff eine Cetanzahl ≥ 45, bevorzugt ≥ 47 und besonders bevorzugt ≥ 51 auf. Die Bestimmung der Cetanzahl ist in den Beispielen beschrieben.

In einer bevorzugten Ausführungsform weist der erfindungsgemäße Kraftstoff für Selbstzündungsmotoren eine kinematische Viskosität von ≥ 0,4 mm²/s und bevorzugt von ≥ 0,5 mm²/s auf. Die kinematische Viskosität wurde nach DIN ISO 3104 bei 20°C bestimmt.

In einer bevorzugten Ausführungsform ist die Schmierfähigkeit (HFRR (High Frequency Reciprocating Rig) ≤ 400 ppm, bevorzugt ≤ 310 ppm und besonders bevorzugt ≤ 300 ppm. Die Bestimmung der Schmierfähigkeit erfolgte nach DIN EN 590 bei 20°C.

In einer besonders bevorzugten Ausführungsform können bis zu etwa 12 Gew.-%, vorzugsweise bis zu etwa 10 Gew.-%, des mindestens einen niedermolekularen Polyoxymethylendialkylethers durch Dimethylether ersetzt werden. Dies führt zur Erhöhung des Dampfdrucks auf 60 kPa (Sommerkraftstoff) bzw. 90 kPa (Erzeugung einer "Fettdampfglocke") und zur Kostensenkung. Dimethylether dient hierbei als Ersatzstoff für den niedermolekularen Polyoxymethylendialkylether, insbesondere Dimethoxymethan. Dimethylether besitzt bei 20°C einen Dampfdruck von 504 kPa und löst sich gut in dem niedermolekularen Polyoxymethylendialkylether, insbesondere dem Dimethoxymethan.

In einer besonders bevorzugten Ausführungsform enthält der erfindungsgemäße Kraftstoff für Selbstzündungsmotoren mindestens einen niedermolekularen Polyoxymethylendialkylether der Formel RO(-CH₂O-)ₙR, wobei R ein Methyl-Rest und n = 1 ist, mindestens einen höhermolekularen Polyoxymethylendialkylether der Formel RO(-CH₂O-)ₙR, wobei R ein Methyl-Rest und n = 6 bis 10 ist, und mindestens einen Polyalkylenglykolalkylether der Formel R¹O(-CH₂-CHR²-O-)ₙH, wobei R¹ ein n-Butyl- und R² ein Wasserstoff- oder ein Methyl-Rest ist, und wobei der Polyalkylenglykolalkylether als Mischpolymerisat vorliegt. Besonders vorteilhaft ist ein Mischpolymerisat aus Polyethylenglykolalkylethern und Polypropylenglykolalkylethern.

Der erfindungsgemäße Kraftstoff für Selbstzündungsmotoren ermöglicht die indirekte Anwendung von Methanol als Kraftstoff für Motoren. Die Zulassung der Abgabe von Methanol als Kraftstoff bei öffentlichen Tankstellen in der Europäischen Union und den USA erscheint aufgrund seiner ausgeprägten toxischen Eigenschaften in Zukunft als ausgeschlossen. Auf der anderen Seite kann Methanol im großtechnischen Maßstab in Monooxymethylendimethylether umgewandelt werden. Somit ermöglicht der erfindungsgemäße Kraftstoff für Selbstzündungsmotoren die indirekte Anwendung von Methanol als Kraftstoff für Selbstzündungsmotoren, da Methanol nur für den Betrieb von Fremdzündungsmotoren geeignet ist.

Der erfindungsgemäße Kraftstoff für Selbstzündungsmotoren ermöglicht also die indirekte Anwendung von Methanol und Dimethylether als flüssigen Kraftstoff für Dieselmotoren. Dimethylether ist ein hervorragender Dieselkraftstoff, welcher wie Monooxymethylendimethylether rußfrei verbrennt. Der Hauptnachteil von Dimethylether liegt in seinem niedrigen Siedepunkt von -25°C. Er muss deshalb als Flüssiggas gehandhabt werden und besitzt damit den Nachteil, dass die vorhandene Infrastruktur für flüssige Kraftstoffe nicht genutzt werden kann.

Die Erfindung betrifft auch die Verwendung des erfindungsgemäßen Kraftstoffs in einem Selbstzündungsmotor.

Der erfindungsgemäße Kraftstoff für Selbstzündungsmotoren wird vorzugsweise zusammen mit einem Motorenöl auf Basis von Polyalkylenglykolethern eingesetzt. Besonders bevorzugt als Basisöl sind Motorenöle auf Grundlage von Polypropylenalkylethern, besonders bevorzugt auf Grundlage von Polypropylenglykolbutylethern. Das heißt der erfindungsgemäße Kraftstoff für Selbstzündungsmotoren kann in Motoren eingesetzt werden, die mit den chemisch verwandten Motorölen auf Basis von Polyalkylenglykolethern geschmiert werden. Damit bleibt der übliche Eintrag kleiner Kraftstoffmenge in das Motorenöl und kleinerer Motorenölanteile in dem Kraftstoff wegen der chemischen Verwandtschaft der beiden Kraftstoffe ohne negative Auswirkung.

Mit dem erfindungsgemäßen Kraftstoff für Selbstzündungsmotoren ist es möglich, das vom Dieselkraftstoff her bekannte Ruß/NOₓ- und PN/NOₓ-Trade off zu unterdrücken.

Schließlich ermöglicht der Einsatz des erfindungsgemäßen Kraftstoffs die gesetzlich vorgeschriebenen Partikelanzahlgrenzwerte und NOₓ-Grenzwerte gemäß der Euro-VI-Norm ohne Abgasnachbehandlung zu unterschreiten. Dies gilt für den Fall, dass der Selbstzündungsmotor mit entsprechend hohen (bis zu 40%) Abgasrückführungsraten betrieben wird.

Alternativ können die erfindungsgemäßen Kraftstoffe auch als Reduktionsmittel beim Einsatz eines SCR-Katalysators verwendet werden.

Das heißt, die Verbrennung des erfindungsgemäßen Kraftstoffs für Selbstzündungsmotoren in magerlaufenden Selbstzündungsmotoren erfolgt in Analogie zur Verbrennung des gasförmigen Dimethylethers auch bei hohen AGR-Raten ruß- und partikelfrei. Damit lassen sich sehr niedrige NOₓ- und Partikelanzahlemissionen mit innermotorischen Maßnahmen erzielen. Die Abgasnachbehandlung benötigt keinen Partikelfilter, sondern lediglich einen Oxidationskatalysator, der die Emission von un- und teilverbranntem erfindungsgemäßen Kraftstoffs für Selbstzündungsmotoren verhindert. Vorteile sind die Verminderung des heizwertbezogenen Kraftstoffverbrauchs durch geringen Abgasgegendruck der Abgasanlage und signifikante Verminderung der Kosten, des Platzbedarfs und des Gewichts des Abgasnachbehandlungssystems.

Wie erwähnt führt der Einsatz des erfindungsgemäßen Kraftstoffs für Selbstzündungsmotoren zur Vermeidung des PN/NOx-Trade off im Bereich bis zu niedrigsten NOₓ-Emissionen von < 0,4 g NOx/kWh.

Der dem erfindungsgemäßen Kraftstoff zugrundeliegende Basiskraftstoff, das heißt der niedermolekulare Polyoxymethylendialkylether der Formel RO(-CH₂O-)ₙR ist aus Erdgas über Methanol und Formaldehyd CH₂O (Gewinnung aus Methanol) herstellbar. Der ebenfalls als Ausgangsmaterial mögliche Dimethylether (DME) wird durch Vergasung von Biomasse über Synthesegas gewonnen. Das Ausgangsmaterial Methanol kann auch durch Recycling von CO₂ aus Industrieabgasen (Stahlwerken, Zementwerken), Kraftwerksabgasen oder Biogasanlagen mit Wasserstoff aus der Methanspaltung oder der Wasserelektrolyse hergestellt werden. Im Falle der Verwendung von Elektrolysewasserstoff zur CO₂-Hydrierung wird der erfindungsgemäße Kraftstoff nachhaltig in beliebiger Menge verfügbar. Daher ist es mit dem erfindungsgemäßen Kraftstoff möglich die CO₂-Bilanz der Emissionen von Dieselmotoren zu verbessern.

Auch die heizwertbezogenen Herstellungskosten des erfindungsgemäßen Kraftstoffs liegen im Bereich von synthetischem Diesel.

Durch die ruß- und partikelfreie Verbrennung des erfindungsgemäßen Kraftstoffs bei sehr geringer NOₓ-Emission ist es möglich, die Abgasnachbehandlung zu vereinfachen. Dies bringt insbesondere bei Dieselmotoren in Arbeitsmaschinen einen wirtschaftlichen Vorteil ("Gerätediesel").

Die ruß- und partikelfreie Verbrennung des erfindungsgemäßen Kraftstoffs ermöglicht in Kombination mit einer mehrstufigen katalytischen Abgasnachbehandlung (ohne Dieselpartikelfilter) nach dem Stand der Euro-VI-Technologie die Einhaltung zukünftig weiter verschärfter Emissionsgesetzgebung.

Ferner ermöglicht die ruß- und partikelfreie Verbrennung des erfindungsgemäßen Kraftstoffs den Einsatz der Niederdruck-AGR ohne Reinigung/Filterung des rückgeführten Abgases. Damit kann der Wirkungsgrad des Motors erhöht werden. Unter Berücksichtigung der Emissionen hat eine Niederdruck-AGR Wirkungsgradvorteile, da bei Kraftstoffen mit einem Sauerstoffgehalt über 40% der Luftbedarf zur motorischen Verbrennung deutlich vermindert ist und damit die zusätzliche Kompressionsarbeit des Luftverdichters für das rückgeführte Abgas reduziert ist.

Schließlich ist der erfindungsgemäße Kraftstoff farblos, ungiftig und praktisch frei von Fremdstoffen. Er gehört auch zur Wassergefährdungsklasse 1.

Im Folgenden wird die Erfindung anhand von Beispielen illustriert. Die Beispiele sollen jedoch in keiner Weise limitierend oder beschränkend für die vorliegende Erfindung sein.

### Aufbau des Motorenprüfstandes und der Abgas- und Partikelmesseinrichtung

### Einzylindermotor mit Messeinrichtungen

Versuchsträger war ein Einzylinder-Forschungsmotor. Hubraum, Kurbelgeometrie und Zylinderkopfgestaltung sind bei diesem Versuchsträger von der MAN Modellreihe D20 abgeleitet. Der Motor verfügt über eine externe, temperierte Aufladung, variable Einstellmöglichkeit des Abgasgegendrucks und gekühlte externe Abgasrückführung (Hochdruck-AGR). Der Kraftstoff wird über ein Common Rail System eingebracht, wobei Kraftstoffförderung, Injektoren und Düsen aus der MAN D20 Baureihe stammen.

Als Motorenöl wurde ein Polypropylenglykolmonobutylether mit ca. 4% aschefreien Additiven der Fa. Dow Chemical, Horgen eingesetzt.

Im Abgas wurden gasförmige Komponenten (CO, THC, CO2, 02, NOx) mit einer Multikomponenten-Abgasanalyse (HoribaMEXA 7000-Reihe) und einem AVL Sesam FTIR (CH₂O, CH₃OH, OME1) erfasst. Ruß wurde mit AVL MSS 483 (Microsoot Sensor) gemessen. Die gemessenen Rußkonzentrationen befanden sich an der Nachweisgrenze des Geräts von 0,05 mg/kWh. Zur Messung der Partikelanzahlkonzentration (PN) wurde Rohabgas mit einer Direktentnahmeeinheit im Verhältnis 1:10 verdünnt und einer Partikelzählanlage (Horiba MEXA-2300 SPCS) zugeführt, um die Partikelanzahl (PN) in einem PMP (particle measurement program)-nahen Verfahren zu ermitteln.

Die Untersuchungen fanden an stationären Betriebspunkten aus dem ESC (European steady cycle) statt.

**Tabelle 1: Beschreibung des Einzylindermotors**

| | |
|---|---|
| Drehzahl | 1200 1/min |
| Indizierter Mitteldruck | 13 bar |
| Ladedruck (abs.) | 1,93 bar |
| Abgasdruck (abs.) | 1,58 bar |
| ATL-Gesamtwirkungsgrad (sim.) | 60 % |
| Ladelufttemperatur | 40 °C |
| Verbrennungsschwerpunkt | 8°KW nach ZOT |
| Einspritzdruck | 1800 bar |
| Einspritzung | Vor- und Haupteinspritzung |

Das PMP- Verfahren ist in (1) und (2) beschrieben, die Grenzwerte für ESC und ETC werden in (3) aufgeführt:
(1) United Nations, ECE Regulation No. 49, Revision 5, Amendment 1, 2011.
(2) United Nations, Regulation No. 83, Revision 4, 2011.
(3) Europäische Union, Verordnung (EG) Nr 2005/55/EG.

### Ausführungsbeispiel A:

### OME1a:

Als Kraftstoff wurde Dimethoxymethan (OME1) mit Zusätzen von 3 Gew.-% Polyethylenglykoldimethylether 1000 (Clariant) und 3 Gew.-% Synalox 40 D700 (Mischpolymerisat aus Poly(ethylen/propylen)glykolalkylether, Dow Chemical) eingesetzt. Dieser Kraftstoff wird als OME1a bezeichnet.

Der Sauerstoffgehalt beträgt 41,6% (zum Vergleich OME1: 42,0%)

Im angegebenen Betriebspunkt am Einzylindermotor (Einspritzdruck: 1800 bar) wurden die in Tabelle 3 angegebenen Emissionswerte erzielt. Alle Angaben beziehen sich auf die indizierte Motorleistung.

**Tabelle 2: Ergebnisse der OME1a Versuche**

| AGR | NOₓ | Ruß (MSS) | PN | | CO | THC |
|---|---|---|---|---|---|---|
| [%(m/m)] | [g/kWh] | [mg/kWh] | [#/kWh] | [#/cm³] | [g/kWh] | [g/kWh] |
| keine | 15,99 | 0,12 | 2,9E+11 | 6,8E+04 | 0,20 | 0,09 |
| 16,1 | 3,11 | 0,09 | 1,6E+11 | 4,5E+04 | 0,30 | 0,09 |
| 18,2 | 2,19 | 0,08 | 1,3E+11 | 3,8E+04 | 0,32 | 0,09 |
| 21,1 | 1,26 | 0,07 | 9,3E+10 | 2,9E+04 | 0,39 | 0,09 |
| 29,0 | 0,21 | 0,06 | 8,0E+10 | 2,8E+04 | 9,56 | 0,15 |

Mit einem nachgeschalteten Oxidationskatalysator (Abmessungen: Träger: LS300/600 der Fa. Emitec, Lohmar; Beschichtung: 40g/ft³ Platin) wird CO um 99% auf 0,1 g/kWh und THC um 98% auf 0,03 g/kWh abgesenkt. Die Konzentrationen von CH₂O, CH₃OH und OME1 lagen unter der Nachweisgrenze des FTIR-Messgeräts.

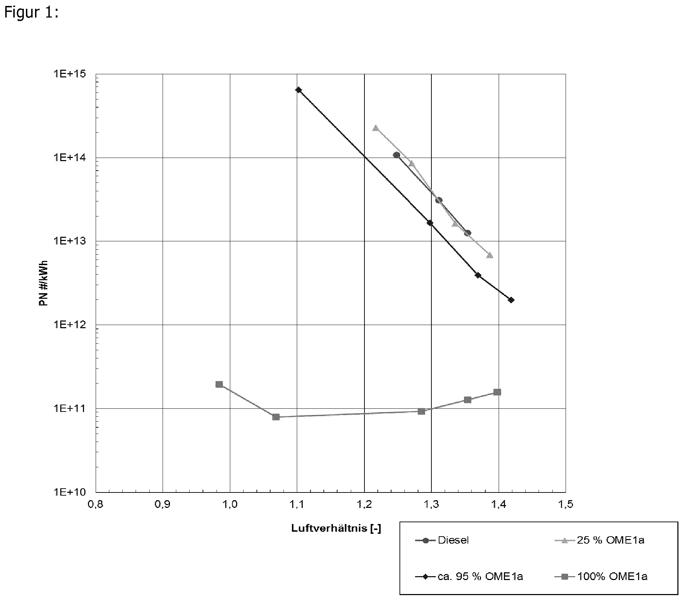

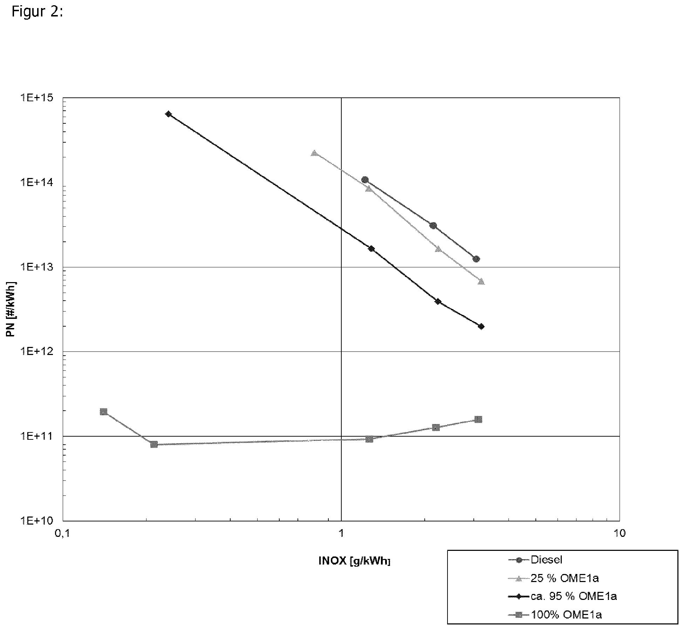

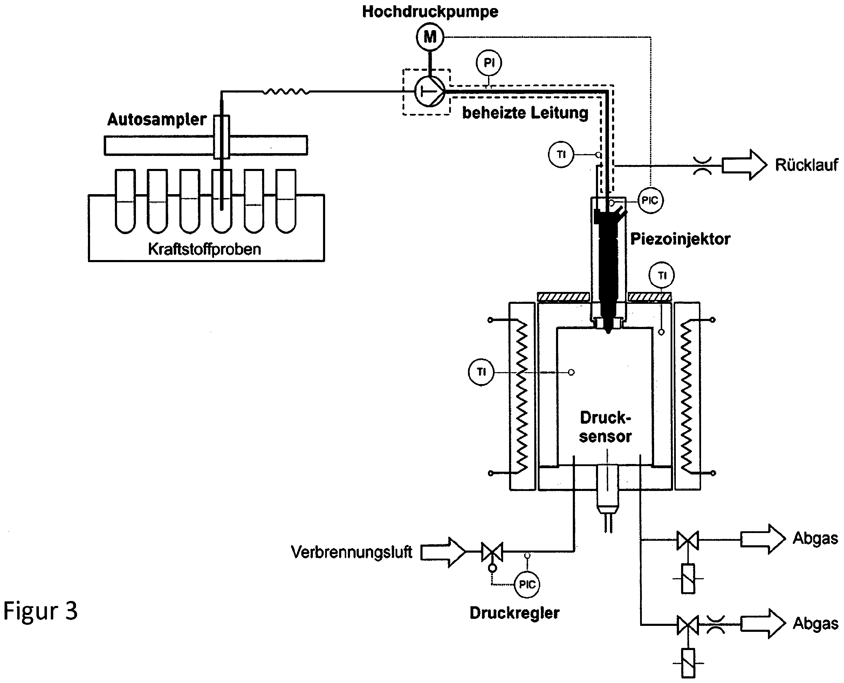

Die Vermeidung des Ruß/NOₓ- und PN/NOₓ-Trade off beim Einsatz von OME1a kann den Figuren 1 und 2 entnommen werden.

### Vergleichsbeispiel A1:

Als Kraftstoff wurde OME1 mit 3 Gew.-% Polyethylenglykoldimethylether 1000 (Clariant) und 3% Synalox 40D eingesetzt. Der Restgehalt an Dieselkraftstoff betrug etwa 5 Gew.-%.

Der Sauerstoffgehalt des Kraftstoffs beträgt 39,5%.

Im angegebenen Betriebspunkt wurden die in Tabelle 3 angegebenen Emissionswerte erzielt. Alle Angaben beziehen sich auf die indizierte Motorleistung.

**Tabelle 3: Ergebnisse der OME1a+5% Diesel Versuche**

| AGR | NOₓ | Ruß (MSS) | PN | | CO | THC |
|---|---|---|---|---|---|---|
| [%(m/m)] | [g/kWh] | [mg/kWh] | [#/kWh] | [#/m³] | [g/kWh] | [g/kWh] |
| keine | 17.51 | 0.06 | 4.9E+11 | 1.2E+05 | 0.13 | 0.18 |
| 16.0 | 3.19 | 0.07 | 2.0E+12 | 5.8E+05 | 0.15 | 0.17 |
| 17.9 | 2.22 | 0.07 | 3.9E+12 | 1.2E+06 | 0.16 | 0.16 |
| 20.7 | 1.28 | 0.26 | 1.7E+13 | 5.3E+06 | 0.24 | 0.15 |
| 27.1 | 0.24 | 22.9 | 6.5E+14 | 2.3E+08 | 8.86 | 0.15 |

Durch den Restgehalt an Dieselkraftstoff (ca. 5%) wurden die Zielwerte bezüglich des Euro-VI-Emissionsniveau deutlich verfehlt. Das Ruß/NO_{X}- und PN/ NO_{X}-Trade off kann ebenfalls den Figuren 1 und 2 entnommen werden.

### Ausführungsbeispiel C:

Ähnlich gute Ergebnisse wie im Ausführungsbeispiel A konnten mit den aus Tabelle 4 ersichtlichen Kraftstoffzusammensetzungen erzielt werden.

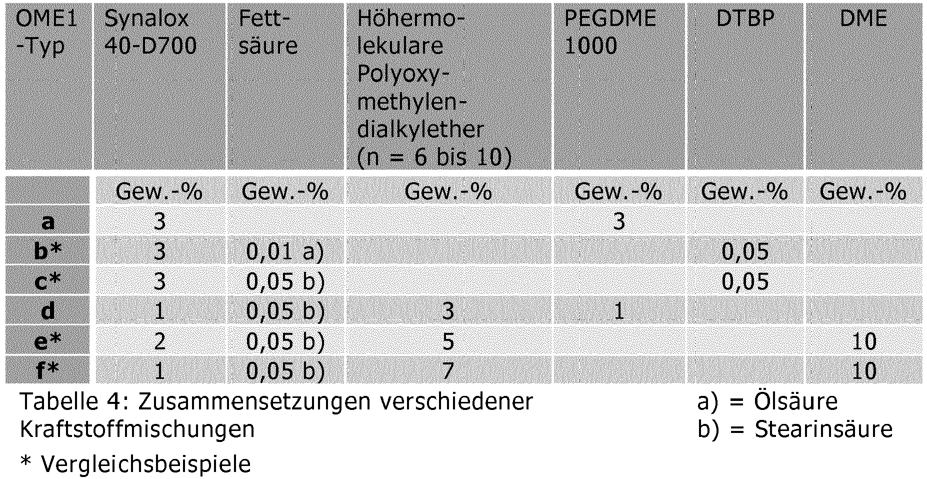

### Ausführungsbeispiel D:

Es wurden die drei in Tabelle 5 genannten Kraftstoffzusammensetzungen untersucht. Tabelle 5 zeigt auch deren Eigenschaften.

**Tabelle 5: Eigenschaften von erfindungsgemäßen Kraftstoffzusammensetzungen**

| Prüfmuster | Cetanzahl | Kin. Viskosität (20 °C) | HFRR (Lubricity) (20 °C) | CFPP | Heizwert, unterer |
|---|---|---|---|---|---|
| | [-] | [mm²/s] | [µm] | [°C] | [J/g] |
| | AFIDA | DIN EN ISO 3104 | DIN EN ISO 12156-1 | DIN EN 116 | DIN 51900-2 mod. |
| OME1+PEG-DME1000 3 %+Synalox 40-D700 3 % (OME1a) | 48.3 | 0.5831 | 297 | -22 | 20507 |
| OME1+PEG-DME1000 3 %+Synalox 100-120B 3 % | 47.5 | 0.4985 | 309 | -10 | |
| OME1+PEG-DME1000 3 %+Synalox 050-155B 3 % | 48.5 | 0.5133 | 303 | -13 | |

### Ausführungsbeispiel E:

Es wurden die drei in Tabelle 6 genannten Kraftstoffzusammensetzungen untersucht. Tabelle 6 zeigt auch deren Eigenschaften.

**Tabelle 6: Eigenschaften von erfindungsgemäßen Kraftstoffzusammensetzungen**

| Prüfmuster | Cetanzahl | Kin. Viskosität (20 °C) | HFRR (Lubricity) (20 °C) | CFPP | Heizwert, unterer |
|---|---|---|---|---|---|
| | [-] | [mm²/s] | [µm] | [°C] | [J/g] |
| | AFIDA | DIN EN ISO 3104 | DIN EN ISO 12156-1 | DIN EN 116 | DIN 51900-2 mod. |
| OME1 + 3% Synalox D10/15 -MG 8000 (OME1g)* | 49.3 | 0.5478 | 267 | <-60 | |
| OME1 + 3% Synalox D10/15 -MG 10 000 (OME1h)* | 48.5 | 0.6190 | 254 | <-60 | |
| OME1 + 3% Synalox D10/15 -MG 12 000 (OME1i)* | 48.6 | 0.7743 | 251 | <-60 | |

| | | | | | |
|---|---|---|---|---|---|
| * Nicht erfindungsgemäße Vergleichsbeispiele | | | | | |

Die Ergebnisse zeigen, dass obige Mischpolymerisate, die über etwa 80 Gew.-% Polyethylenglykolalkylether enthalten und ein Molekulargewicht von über etwa 7500 Dalton besitzen, bereits ohne weitere Zusätze die erforderliche Verbesserung der Eigenschaften von OME1 hinsichtlich Cetanzahl, Viskosität und Schmierfähigkeit verbessern.

### Weitere Anmerkungen:

1. Die Bestimmung der Cetanzahl von Kraftstoffen auf Dimethoxymethan (OME1)-Basis erfolgte wie folgt:
Zur Berechnung der Cetanzahlen der Kraftstoffe auf DMM-Basis kommt das sogenannte AFIDA-Gerät (Advanced Fuel Ignition Delay Analyzer) zum Einsatz. Es handelt sich hierbei um eine Konstantvolumen-Brennkammer, welche mit modernen Einspritzdüsen bei hohen Temperaturen, Brennkammer- sowie Einspritzdrücken betrieben werden kann.
Ein vereinfachtes Aufbauschema ist in folgender Grafik abgebildet: 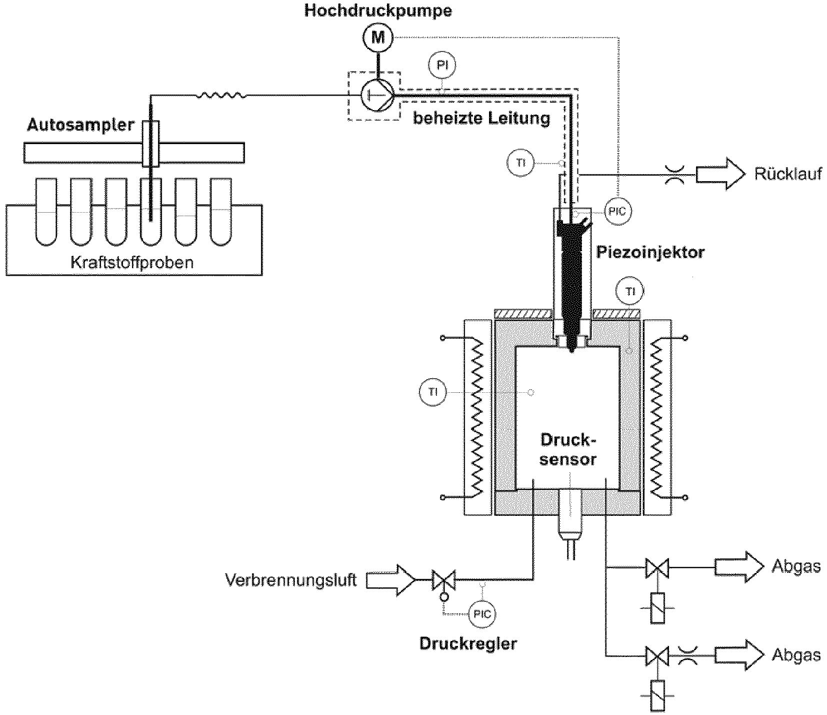
Nach der Kalibrierung des Gerätes mit Hilfe primärer Standardkraftstoffe (n-Hexadecan, 1-Methylnaphtalin), kann aus der gemessenen Zündverzugszeit eines unbekannten Kraftstoffes die Cetanzahl auf Basis einer mathematischen Funktion berechnet werden. Das Gerät kommt zum Einsatz, da es aufgrund der geringen benötigten Probenvolumina und der physikalischen Eigenschaften der Testkraftstoffe einen Vorteil gegenüber genormten Prüfverfahren besitzt. Mit Letzteren wäre eine Bestimmung der Cetanzahl der Versuchskraftstoffe nicht möglich.
2. In Tabelle 7 sind einige Eigenschaften verschiedener Kraftstoffe aufgeführt.

**Tabelle 7: Eigenschaften verschiedener Kraftstoffe**

| | POMDME | Formel | MG | Dichte | Smp. | Kp. | Flp. | Züp. | CZ | O-G. | KinVis | Hwu |
|---|---|---|---|---|---|---|---|---|---|---|---|---|
| OME | Polyoxymethylen-DME | CnH₂ₙ₊₂Oₙ₋₁ | | g/ml (15°C) | °C | °C | °C | °C | | % O | cSt | MJ/l (15°C |
| | | | | | | | | | | | | |
| (1) | Oxymethlen-DME | C₃H₈O₂ | 76,1 | 0,87 | -105 | 42,3 | -18 | 237 | 37,6 | 42 | 0,33 | 20,2 |
| 1 | OME1a | | 260,5 | | -22* | | | | 48 | 41,6 | 0,58 | 20,5 |
| 1 | OME1b* | | 233 | | <-60* | | | | 47,1 | 41,7 | 0,53 | 20,3 |
| 1 | OME1c* | | 233 | 0,87 | <-60* | 41,5 | <-20 | | 51,8 | 41,7 | 0,53 | 20,4 |
| 1 | OME1g* | | 314 | 0,88 | <-60* | | | | 49.3 | | 0,55 | 20,5 |
| 1 | OME1h* | | 373 | 0,88 | <-60° | | | | 48.5 | | 0,62 | 20,5 |
| 1 | OME1i* | | 434 | 0,88 | <-60* | | | | 49 | 41,8 | 0,77 | 20,5 |
| 2 | Dioxymethylen-DME* | C₄H₁₀O₃ | 105,1 | 0,97 | -70 | 105 | | | 63 | 45,7 | 0,66 | |
| 3 | Trioxymethylen-DME* | C₅H₁₂O₄ | 134,2 | 1,03 | -44 | 155 | 54 | 205 | 78 | 47,7 | 1,02 | 21,0 |
| 4 | Tetraoxymethylen-DME* | C₆H₁₄O₅ | 163,2 | 1,07 | -11 | 190 | 69** | | 90 | 49 | 1,64 | 20,9 |
| 5 | Pentaoxymethylen-DME* | C₇H₁₆O₆ | 192,2 | 1,1 | 18 | 242 | >70 | | 100 | 49,9 | | |

| | | | | | | | | | | | | |
|---|---|---|---|---|---|---|---|---|---|---|---|---|
| ** Mischung OME3/4/5) * Vergleichsbeispiele * CFPP | | | | | | | | | | | | |

## Patentansprüche

1. Kraftstoff für Selbstzündungsmotoren, enthaltend folgende Bestandteile
a) mindestens einen niedermolekularen Polyoxymethylendialkylether der Formel RO(-CH₂O-)ₙR, wobei R ein C₁- bis C₄-Alkyl-Rest und n 1 bis 5 ist,
b) 0,05 bis 5 Gew.-% mindestens eines Polyalkylenglykolalkylethers der Formel R¹O(-CH₂-CHR²-O-)ₙH sowie Mischpolymerisate davon und/oder der Formel H(-O-CHR²-CH₂-)ₙ-O-CH₂-CH₂-O-(-CH₂-CH R²-O-)ₙH sowie Mischpolymerisate davon, wobei R¹ ein C₁- bis C₄-Alkyl-Rest, R² ein Wasserstoff- oder Methyl-Rest und n 10 bis 200 ist, sowie Gemische von diesen Polyalkylenglykolalkylethern,
c) 0 bis 20 Gew.-% mindestens eines höhermolekularen Polyoxymethylendialkylethers der Formel RO(-CH₂O-)ₙR, wobei R ein C₁- bis C₄-Alkyl-Rest und n 6 bis 10 ist,
d) 1 bis 5 Gew.-% mindestens eines höhermolekularen Polyethylenglykoldialkylethers der Formel RO(-CH₂CH₂O-)ₙR, wobei R ein C₁- bis C₄-Alkyl-Rest und n 11 bis 23 ist,
e) 0 bis 0,5 Gew.-% mindestens einer organischen Peroxidverbindung,
f) 0 bis 0,1 Gew.-% mindestens einer längerkettigen Fettsäure und
g) 0 bis 12 Gew.-% Dimethylether, wobei der bis 100 Gew.-% fehlende Anteil auf den mindestens einen niedermolekularen Polyoxymethylendialkylether fällt.

2. Kraftstoff nach Anspruch 1, wobei in dem mindestens einem niedermolekularen Polyoxymethylendialkylether R ein Methyl- oder Ethyl-Rest, besonders bevorzugt ein Methyl-Rest ist.

3. Kraftstoff für Selbstzündungsmotoren nach Anspruch 1 oder 2, wobei in dem mindestens einem niedermolekularen Polyoxymethylendialkylether n = 1, und/oder 2, oder 3, 4 und/oder 5, vorzugweise 1 ist.

4. Kraftstoff für Selbstzündungsmotoren nach einem der vorangegangenen Ansprüche, wobei in dem mindestens einem Polyalkylengykolalkylether R¹ ein n-Butyl-Rest ist.

5. Kraftstoff für Selbstzündungsmotoren nach einem der vorangegangenen Ansprüche, wobei der mindestens eine Polyalkylenglykolalkylether ein Mischpolymerisat ist, in welchem in etwa 10 bis 40 Gew.-%, vorzugsweise in etwa 40 Gew.-%, des Mischpolymerisats R² ein Methyl-Rest und in etwa 60 bis 90 Gew.-%, vorzugsweise in etwa 60 Gew.-% des Mischpolymerisats R² ein Wasserstoff-Rest ist.

6. Kraftstoff für Selbstzündungsmotoren nach einem der vorangegangenen Ansprüche, wobei es sich bei dem mindestens einem Polyalkylenglykolalkylether um den Polyalkylenglykolalkylether der Formel R¹O(-CH₂-CHR²-O-)ₙH sowie Mischpolymerisate davon handelt.

7. Kraftstoff für Selbstzündungsmotoren nach einem der vorangegangenen Ansprüche, wobei der mindestens eine Polyalkylenglykolalkylether in einer Menge von 2 bis 4 Gew.-% vorliegt.

8. Kraftstoff für Selbstzündungsmotoren nach einem der vorangegangenen Ansprüche, wobei in dem mindestens einem höhermolekularen Polyoxymethylendialkylether und/oder in dem mindestens einem höhermolekularen Polyethylenglykoldialkylether R ein Methyl-Rest ist.

9. Kraftstoff für Selbstzündungsmotoren nach einem der vorangegangenen Ansprüche, wobei in dem mindestens einem höhermolekularen Polyoxymethylendialkylether n 6 bis 9, vorzugsweise 6 bis 7 und/oder dem mindestens einem höhermolekularen Polyethylenglykoldialkylether n = 15 bis 30, vorzugsweise n = 25 bis 30 ist.

10. Kraftstoff für Selbstzündungsmotoren nach einem der vorangegangenen Ansprüche, wobei der mindestens eine höhermolekulare Polyoxymethylendialkylether in einer Menge von 2 bis 4 Gew.-% und/oder der mindestens eine Polyethylenglykoldialkylether in einer Menge von 2 bis 4 Gew.-% vorliegt.

11. Kraftstoff für Selbstzündungsmotoren nach einem der vorangegangenen Ansprüche, wobei die organische Peroxidverbindung, vorzugsweise Di-tert-Butylperoxid in einer Menge von 0,01 bis 0,3 Gew.-% vorliegt.

12. Kraftstoff für Selbstzündungsmotoren nach einem der vorangegangenen Ansprüche, wobei die mindestens eine langkettige Fettsäure in einer Menge von 0,01 bis 0,3 Gew.-% vorliegt.

13. Kraftstoff für Selbstzündungsmotoren nach einem der vorangegangenen Ansprüche, wobei der Dimethylether in einer Menge von 1 bis 8 Gew.-% vorliegt.

14. Kraftstoff für Selbstzündungsmotoren nach einem der vorangegangenen Ansprüche, wobei der Kraftstoff einen Sauerstoffgehalt von mehr als 40 Gew.-% aufweist.

15. Kraftstoff für Selbstzündungsmotoren nach einem der vorangegangenen Ansprüche, wobei der Kraftstoff nicht mehr als 1 ppm Schwefel, nicht mehr als 20 ppm Asche und/oder nicht mehr als 5000 ppm, vorzugweise nicht mehr als 500 ppm und besonders bevorzugt nicht mehr als 100 ppm höhere Kohlenwasserstoffe sowie deren Derivate enthält.

16. Kraftstoff für Selbstzündungsmotoren nach einem der vorangegangenen Ansprüche, umfassend 0,05 bis 5 Gew.-% mindestens eines Polyalkylenglykolalkylethers der Formel R¹O(-CH₂-CHR²-O-)ₙH sowie Mischpolymerisate davon und/oder der Formel H(-O-CHR²-CH₂-)ₙ-O-CH₂-CH₂-O-(-CH₂-CHR²-O-)ₙH sowie Mischpolymerisate davon, wobei R¹ ein C₁- bis C₄-Alkyl-Rest wobei R² ein Wasserstoff- oder Methyl-Rest und n 10 bis 55 ist, sowie Gemische von diesen Polyalkylenglykolalkylethern.

17. Kraftstoff für Selbstzündungsmotoren nach einem der vorangegangenen Ansprüche, enthaltend bzw. bestehend aus
a) Dimethoxymethan,
b) 0,05 bis 5 Gew.-%, vorzugsweise 2 bis 4 Gew.%, des Mischpolymerisats des Polyalkylenglykolalkylethers der Formel H(-O-CHR²-CH₂-)ₙ-O-CH₂-CH₂-O-(-CH₂-CHR²-O-)ₙH, und
d) 1 bis 5 Gew.-% mindestens eines höhermolekularen Polyethylenglykoldialkylethers der Formel RO(-CH₂CH₂O-)ₙR, wobei R ein C₁- bis C₄-Alkyl-Rest und n 11 bis 23 ist.

18. Verwendung des Kraftstoffs für Selbstzündungsmotoren nach einem der vorangegangenen Ansprüche in Selbstzündungsmotoren mit bzw. ohne AGR sowie als Reduktionsmittel an einem SCR-Katalysator.

## Claims

1. Fuel for self-ignition engines, containing the following constituents
a) at least one low-molecular polyoxymethylene dialkyl ether of the formula RO(-CH₂O-)ₙR, wherein R is a C₁ to C₄ alkyl group and n is 1 to 5,
b) 0.05 to 5 % by weight of at least one polyalkylene glycol alkyl ether of the formula R¹O(-CH₂-CHR²-O-)ₙH as well as mixed polymers thereof and/or of the formula H(-O-CHR²-CH₂-)n-OCH₂-CH₂-O-(-CH₂-CHR²-O-)nH as well as mixed polymers thereof, wherein R¹ is a C₁ to C₄ alkyl group, R² is a hydrogen group or methyl group and n is 10 to 200, as well as mixtures of these polyalkylene glycol alkyl ethers,
c) 0 to 20 % by weight of at least one higher-molecular polyoxymethylene dialkyl ether of the formula RO(-CH₂O-)ₙR, wherein R is a C₁ to C₄ alkyl group and n is 6 to 10,
d) 1 to 5 % by weight of at least one higher-molecular polyethylene glycol dialkyl ether of the formula RO(-CH₂CH₂O-)ₙR, wherein R is a C₁ to C₄ alkyl group and n is 11 to 23,
e) 0 to 0.5 % by weight of at least one organic peroxide compound,
f) 0 to 0.1 % by weight of at least one longer-chain fatty acid and
g) 0 to 12 % by weight dimethyl ether, wherein the proportion missing to 100 % by weight falls to the at least one low-molecular polyoxymethylene dialkyl ether.

2. Fuel according to claim 1, wherein in the at least one low-molecular polyoxymethylene dialkyl ether R is a methyl or ethyl group, especially preferably a methyl group.

3. Fuel for self-ignition engines according to claim 1 or claim 2, wherein in the at least one low-molecular polyoxymethylene dialkyl ether n = 1, and/or 2, or 3, 4 and/or 5, preferably 1.

4. Fuel for self-ignition engines according to any one of the preceding claims, wherein in the at least one polyalkylene glycol alkyl ether R¹ is an n-butyl group.

5. Fuel for self-ignition engines according to any one of the preceding claims, wherein the at least one polyalkylene glycol alkyl ether is a mixed polymer, in which approximately 10 to 40 % by weight, preferably approximately 40 % by weight, of the mixed polymer R² is a methyl group and approximately 60 to 90 % by weight, preferably approximately 60 % by weight, of the mixed polymer R² is a hydrogen group.

6. Fuel for self-ignition engines according to any one of the preceding claims, wherein the at least one polyalkylene glycol alkyl ether is the polyalkylene glycol alkyl ether of the formula R¹O(-CH₂-CHR²-O-)ₙH and mixed polymers thereof.

7. Fuel for self-ignition engines according to any one of the preceding claims, wherein the at least one polyalkylene glycol alkyl ether is present in a quantity of 2 to 4 % by weight.

8. Fuel for self-ignition engines according to any one of the preceding claims, wherein in the at least one higher-molecular polyoxymethylene dialkyl ether and/or in the at least one higher-molecular polyethylene glycol dialkyl ether R is a methyl group.

9. Fuel for self-ignition engines according to any one of the preceding claims, wherein in the at least one higher-molecular polyoxymethylene dialkyl ether n is 6 to 9, preferably 6 to 7 and/or in the at least one higher-molecular polyethylene glycol dialkyl ether n = 15 to 30, preferably n = 25 to 30.

10. Fuel for self-ignition engines according to any one of the preceding claims, wherein the at least one higher-molecular polyoxymethylene dialkyl ether is present in a quantity of 2 to 4 % by weight and/or the at least one polyethylene glycol dialkyl ether is present in a quantity of 2 to 4 % by weight.

11. Fuel for self-ignition engines according to any one of the preceding claims, wherein the organic peroxide compound, preferably di-tert-butyl peroxide, is present in a quantity from 0.01 to 0.3 % by weight.

12. Fuel for self-ignition engines according to any one of the preceding claims, wherein the at least one long-chain fatty acid is present in a quantity of 0.01 to 0.3 % by weight.

13. Fuel for self-ignition engines according to any one of the preceding claims, wherein the dimethyl ether is present in a quantity of 1 to 8 % by weight.

14. Fuel for self-ignition engines according to any one of the preceding claims, wherein the fuel has an oxygen content of more than 40 % by weight.

15. Fuel for self-ignition engines according to any one of the preceding claims, wherein the fuel contains no more than 1 ppm sulphur, no more than 20 ppm ash and/or no more than 5000 ppm, preferably no more than 500 ppm and especially preferably no more than 100 ppm higher hydrocarbons and derivatives thereof.

16. Fuel for self-ignition engines according to any one of the preceding claims, comprising 0.05 to 5 % by weight of at least one polyalkylene glycol alkyl ether of the formula R¹O(-CH₂-CHR²-O-)ₙH as well as mixed polymers thereof and/or of the formula H(-O-CHR²-CH₂-)ₙ-O-CH₂-CH₂-O-(-CH₂-CHR²-O-)ₙH as well as mixed polymers thereof, wherein R¹ is a C₁ to C₄ alkyl group, wherein R² is a hydrogen group or methyl group and n is 10 to 55, as well as mixtures of these polyalkylene glycol alkyl ethers.

17. Fuel for self-ignition engines according to any one of the preceding claims, containing or consisting of
a) dimethoxymethane,
b) 0.05 to 5 % by weight, preferably 2 to 4 % by weight, of the mixed polymer of the polyalkylene glycol alkyl ether of the formula H(-O-CHR²-CH₂-)ₙ-O-CH₂-CH₂-O-(-CH₂-CHR²-O-)ₙH, and
d) 1 to 5 % by weight of at least one higher-molecular polyethylene glycol dialkyl ether of the formula RO(-CH₂CH₂O-)ₙR, wherein R is a C₁ to C₄ alkyl group and n is 11 to 23.

18. Use of the fuel for self-ignition engines according to any one of the preceding claims in self-ignition engines with or without EGR and as a reducing agent on an SCR catalyst.

## Revendications

1. Carburant pour moteurs à allumage par compression, comprenant les composants suivants
a) au moins un polyoxyméthylène-dialkyléther de faible poids moléculaire de formule RO(-CH₂O-)ₙR, dans laquelle R est un résidu alkyle en C₁ à C₄ et n vaut 1 à 5,
b) 0,05 à 5 % en poids d'au moins un polyalkylèneglycol-alkyléther de formule R¹O(-CH₂-CHR²-O-)ₙH et des polymères mixtes de celui-ci et/ou de formule H(-O-CHR²-CH₂-)ₙ-O-CH₂-CH₂-O-(-CH₂-CHR²-O-)ₙH et des polymères mixtes de celui-ci, dans lesquelles R¹ est un résidu alkyle en C₁ à C₄, R² est un résidu hydrogène ou méthyle et n vaut 10 à 200, ainsi que des mélanges de ces polyalkylèneglycol-alkyléthers,
c) 0 à 20 % en poids d'au moins un polyoxyméthylène-dialkyléther de poids moléculaire élevé de formule RO(-CH₂O-)ₙR, dans laquelle R est un résidu alkyle en C₁ à C₄ et n vaut 6 à 10,
d) 1 à 5 % en poids d'au moins un polyéthylèneglycol-dialkyléther de poids moléculaire élevé de formule RO(-CH₂CH₂O-)ₙR, dans laquelle R est un résidu alkyle en C₁ à C₄ et n vaut 11 à 23,
e) 0 à 0,5 % en poids d'au moins un composé peroxyde organique,
f) 0 à 0,1 % en poids d'au moins un acide gras à longue chaîne et
g) 0 à 12 % en poids de diméthyléther, où la proportion manquante jusqu'à 100 % en poids revient à l'au moins un polyoxyméthylène-dialkyléther de faible poids moléculaire.

2. Carburant selon la revendication 1, dans lequel R est un résidu méthyle ou éthyle, de manière particulièrement préférée un résidu méthyle, dans l'au moins un polyoxyméthylène-dialkyléther de faible poids moléculaire.

3. Carburant pour moteurs à allumage par compression selon la revendication 1 ou 2, dans lequel n = 1, et/ou 2, ou 3, 4 et/ou 5, de préférence 1, dans l'au moins un polyoxyméthylène-dialkyléther de faible poids moléculaire.

4. Carburant pour moteurs à allumage par compression selon l'une des revendications précédentes, dans lequel R¹ est un résidu n-butyle dans l'au moins un polyalkylèneglycol-alkyléther.

5. Carburant pour moteurs à allumage par compression selon l'une des revendications précédentes, dans lequel l'au moins un polyalkylèneglycol-alkyléther est un polymère mixte, dans lequel R² est un résidu méthyle dans environ 10 à 40 % en poids, de préférence dans environ 40 % en poids du polymère mixte, et R² est un résidu hydrogène dans environ 60 à 90 % en poids, de préférence dans environ 60 % en poids du polymère mixte.

6. Carburant pour moteurs à allumage par compression selon l'une des revendications précédentes, dans lequel l'au moins un polyalkylèneglycol-alkyléther consiste en le polyalkylèneglycol-alkyléther de formule R¹O(-CH₂-CHR²-O-)ₙH et des polymères mixtes de celui-ci.

7. Carburant pour moteurs à allumage par compression selon l'une des revendications précédentes, dans lequel l'au moins un polyalkylèneglycol-alkyléther se présente en une quantité de 2 à 4 % en poids.

8. Carburant pour moteurs à allumage par compression selon l'une des revendications précédentes, dans lequel R est un résidu méthyle dans l'au moins un polyoxyméthylène-dialkyléther de poids moléculaire élevé et/ou dans l'au moins un polyéthylèneglycol-dialkyléther de poids moléculaire élevé.

9. Carburant pour moteurs à allumage par compression selon l'une des revendications précédentes, dans lequel n vaut 6 à 9, de préférence 6 à 7 dans l'au moins un polyoxyméthylène-dialkyléther de poids moléculaire élevé et/ou n = 15 à 30, de préférence n = 25 à 30 dans l'au moins un polyéthylèneglycol-dialkyléther de poids moléculaire élevé.

10. Carburant pour moteurs à allumage par compression selon l'une des revendications précédentes, dans lequel l'au moins un polyoxyméthylène-dialkyléther de poids moléculaire élevé est présent en une quantité de 2 à 4 % en poids et/ou l'au moins un polyéthylèneglycol-dialkyléther est présent en une quantité de 2 à 4 % en poids.

11. Carburant pour moteurs à allumage par compression selon l'une des revendications précédentes, dans lequel le composé de peroxyde organique, de préférence le peroxyde de di-tert-butyle, est présent en une quantité de 0,01 à 0,3 % en poids.

12. Carburant pour moteurs à allumage par compression selon l'une des revendications précédentes, dans lequel l'au moins un acide gras à longue chaîne est présent en une quantité de 0,01 à 0,3 % en poids.

13. Carburant pour moteurs à allumage par compression selon l'une des revendications précédentes, dans lequel le diméthyléther est présent en une quantité de 1 à 8 % en poids.

14. Carburant pour moteurs à allumage par compression selon l'une des revendications précédentes, où le carburant présente une teneur en oxygène de plus de 40 % en poids.

15. Carburant pour moteurs à allumage par compression selon l'une des revendications précédentes, où le carburant ne contient pas plus de 1 ppm de soufre, pas plus de 20 ppm de cendre et/ou pas plus de 5000 ppm, de préférence pas plus de 500 ppm et de manière particulièrement préférée pas plus de 100 ppm d'hydrocarbures de poids élevés et de leurs dérivés.

16. Carburant pour moteurs à allumage par compression selon l'une des revendications précédentes, comprenant 0,05 à 5 % en poids d'au moins un polyalkylèneglycol-alkyléther de formule R¹O(-CH₂-CHR²-O-)ₙH et des polymères mixtes de celui-ci et/ou de formule H(-O-CHR²-CH₂-)ₙ-O-CH₂-CH₂-O-(-CH₂-CHR²-O-)ₙH et des polymères mixtes de celui-ci, dans lesquelles R¹ est un résidu alkyle en C₁ à C₄, R² est un résidu hydrogène ou méthyle et n vaut 10 à 55, ainsi que des mélanges de ces polyalkylèneglycol-alkyléthers.

17. Carburant pour moteurs à allumage par compression selon l'une des revendications précédentes, comprenant et/ou se composant de
a) diméthoxyméthane,
b) 0,05 à 5 % en poids, de préférence 2 à 4 % en poids du polymère mixte de polyalkylèneglycol-alkyléther de formule H(-O-CHR²-CH₂-)ₙ-O-CH₂-CH₂-O-(-CH₂-CHR²-O-)ₙH, et
d) 1 à 5 % en poids d'au moins un polyéthylèneglycol-dialkyléther de poids moléculaire élevé de formule RO(-CH₂CH₂O-)ₙR, dans laquelle R est un résidu alkyle en C₁ à C₄ et n vaut 11 à 23.

18. Utilisation du carburant pour des moteurs à allumage par compression selon l'une des revendications précédentes dans des moteurs à allumage par compression avec et/ou sans RGE ainsi que comme agents réducteurs sur un catalyseur SCR.
